# FASCICULE DE BREVET EUROPEEN

(11) **EP 2 361 830 B1**
(45) Date de publication et mention de la délivrance du brevet: **29.05.2013**
(21) Numéro de dépôt: 10194870.1
(22) Date de dépôt: 14.12.2010
(51) Int. Cl.: B64C 25/40, B64C 25/44

(54) **Ensemble de roue et frein pour aéronef équipé d'un dispositif d'entraînement en rotation**
Landefahrwerk mit Vorrichtung zum Antrieb vom Fahrwerksrad
Landing gear wheel assembly provided with a wheel rotation device

(30) Priorité: 24.12.2009 FR 0959586
(43) Date de publication de la demande: 31.08.2011
(73) Titulaire: Messier-Bugatti-Dowty, 78140 Velizy Villacoublay (FR)
(72) Inventeur: Bucheton, Daniel, 78150, Le Chesnay (FR); Nierlich, Florent, 92250, Lagarenne-Colombes (FR)
(74) Mandataire: Parzy, Benjamin Alain

(56) Documents cités:
- EP-A1- 1 867 567
- DE-A1-102008 006 295
- US-A- 3 977 631
- US-A1- 2007 284 478
- US-B1- 6 450 448

## Description

L'invention est relative à la motorisation des roues d'un atterrisseur principal d'aéronef.

### ARRIERE-PLAN TECHNOLOGIQUE DE L'INVENTION

Afin de permettre des économies de carburant et de réduire le bruit et la pollution engendrée par le fonctionnement des réacteurs au sol, il a été proposé d'assurer le déplacement d'un aéronef sur une aire aéroportuaire sans l'aide des moteurs de propulsion, en motorisant les roues de l'aéronef. A cet égard, diverses propositions ont été formulées. Il a été notamment proposé de motoriser les roues de l'aéronef à l'aide d'un moteur placé directement dans la jante de la roue. Cependant, pour des roues d'atterrisseurs principaux équipées de freins, l'espace intérieur à la jante est en général entièrement occupé par le frein, de sorte que cette disposition n'est pas envisageable.

Il a également été proposé de laisser le tube de torsion du frein libre en rotation sur l'essieu qui porte la roue et de l'entraîner en rotation au moyen d'un moteur électrique. Pour faire tourner la roue, il convient de solidariser la roue au tube de torsion, en actionnant le frein associé. Par contre lors d'un freinage, le moteur électrique doit immobiliser le tube de torsion en contrant le couple de freinage généré par les disques, et doit donc être dimensionné en conséquence. Cet agencement complique beaucoup le frein.

L'état de la technique est notamment illustré par les documents US 2007/284478 A1, US 3 977 631, US 6 450 448, DE 10 2008 006295 A1 et EP 1 867 567 A1.

### OBJET DE L'INVENTION

L'invention a pour objet une roue freinée d'aéronef équipée d'un dispositif d'entraînement en rotation ne nécessitant pas de modifier l'atterrisseur.

### BREVE DESCIPTION DE L'INVENTION

En vue de la réalisation de ce but, on propose un ensemble de roue et frein d'aéronef, la roue comportant une jante montée pour tourner sur un essieu de l'aéronef, et le frein comportant une pile de disques s'étendant dans la jante en service, et un porte-actionneurs portant des actionneurs de freinage en regard de la pile de disques, et dans lequel le porte-actionneurs porte en outre au moins un organe d'entraînement en rotation de la roue qui s'étend à l'extérieur de la jante.

Ainsi, l'organe d'entraînement en rotation est porté par le porte-actionneurs, ce qui ne suppose aucune modification de l'atterrisseur lui-même, l'organe d'entraînement pouvant avantageusement s'étendre dans une région libre de toute interférence, par exemple pardessus le balancier de l'atterrisseur si l'atterrisseur est équipé d'un balancier, ou en avant ou en arrière de la tige coulissante de l'atterrisseur, si les roues sont portées par la tige coulissante. Dans ces régions, l'espace disponible est bien plus important qu'à l'intérieur de la jante, de sorte qu'il est possible de prévoir un organe d'entraînement d'un certain volume.

Selon une disposition préférée, le porte-actionneurs porte une couronne d'entraînement qui est montée en rotation autour du support, la couronne d'entraînement et la roue étant liées en rotation, tandis que la couronne d'entraînement est entraînée par l'organe d'entraînement en rotation.

La couronne d'entraînement ainsi disposée présente un diamètre important ce qui permet une réduction importante entre l'organe d'entraînement en rotation et la roue.

De préférence, la couronne d'entraînement comporte deux membres, dont un est lié en rotation à l'organe d'entraînement et l'autre est liée en rotation à la roue, des moyens d'accouplement permettant de solidariser sélectivement les deux membres de la couronne en rotation. Ainsi, il est possible de désolidariser l'organe d'entraînement en rotation de la roue, pour que celle-ci puisse tourner librement, sans être ralentie voire bloquée par l'organe d'entraînement en rotation.

### BREVE DESCRIPTION DES FIGURES

L'invention sera mieux comprise à la lumière de la description qui suit des figures des dessins annexés, parmi lesquelles :
- la figure 1 est une vue de face partiellement coupée d'un atterrisseur portant deux ensembles de roue et frein selon un premier mode particulier de réalisation de l'invention, seul l'un des ensembles étant ici représenté pour plus de clarté ;
- la figure 2 est une vue en coupe agrandie de l'organe d'entraînement en rotation équipant l'ensemble roue et frein de la figure 1 ;
- la figure 3 est une vue de dessus partielle des moyens d'accouplement entre les deux membres de la couronne d'entraînement ;
- la figure 4 est une vue en perspective du porte-actionneurs portant l'organe d'entraînement ;
- la figure 5 est une vue de face d'un atterrisseur principal équipé de deux ensembles de roue et frein selon un deuxième mode particulier de réalisation de l'invention ;
- la figure 6 est une vue de côté partielle de l'atterrisseur de la figure 5, l'une des roues et le porte-actionneurs associé ayant été omis ;
- la figure 7 est une vue en coupe schématique locale d'un des ensembles roue et frein des figures 5 et 6 ;
- la figure 8 est une vue en coupe schématique locale d'un ensemble roue et frein selon une variante de réalisation de l'invention.

### DESCRIPTION DETAILLEE DES FIGURES

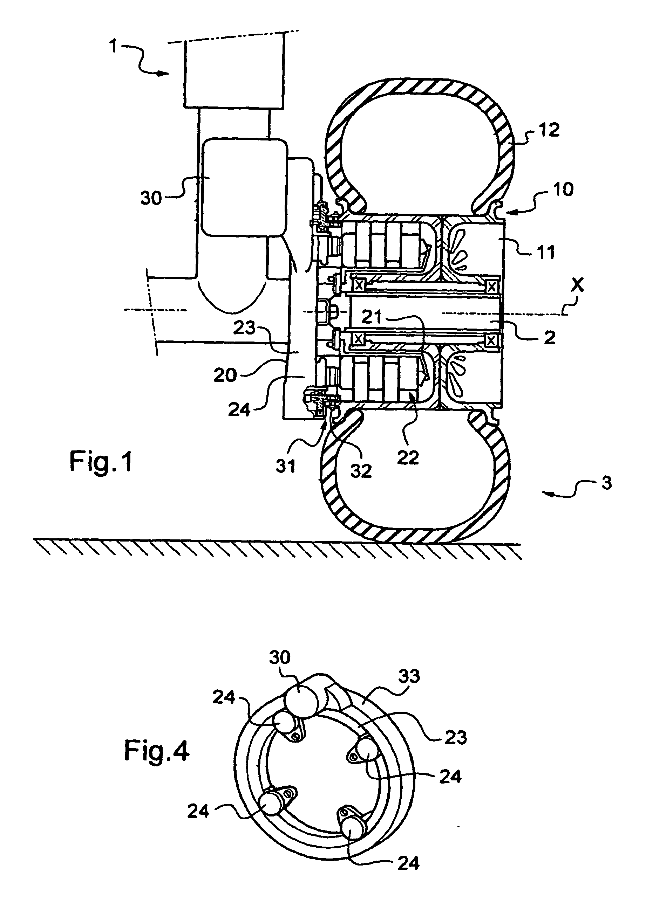

En référence à la figure 1, l'invention est ici illustrée en application à un atterrisseur 1 dont la partie inférieure porte un essieu 2 destiné à recevoir deux ensembles de roue et frein 3 de part et d'autre de l'atterrisseur. Un seul de ces ensembles est ici représenté.

Chaque ensemble comporte :
- une roue 10 comportant une jante 11 (ici comportant deux demi-jantes) qui reçoit un pneumatique 12, et montée pour tourner sur l'essieu 2 au moyen de roulements, selon un axe de rotation X ;
- un frein 20 comportant un tube de torsion 21 boulonné sur l'atterrisseur pour être immobile en rotation, des disques 22 s'étendant entre le tube de torsion 21 et la jante 11 pour être solidaire en rotation alternativement de la jante 11 et du tube de torsion 21, un porte-actionneurs 23 solidaire du tube de torsion 21 et portant des actionneurs de freinage 24, ici des actionneurs hydrauliques comprenant chacun un piston monté pour coulisser dans des cavités du porte-actionneurs 23. Ceci n'est bien sûr pas limitatif, et les actionneurs pourront être du type électrique, intégrés comme ici à la structure du porte-actionneurs, ou démontables unitairement.

Selon l'invention, le porte-actionneurs 23 porte un organe d'entraînement en rotation, en l'occurrence ici un motoréducteur électrique 30 qui entraîne en rotation une couronne d'entraînement 31 montée autour du porte-actionneurs 23 pour tourner sur ce dernier autour de l'axe de rotation X de la roue 10.

Sur la figure 4, on reconnaît aisément le porte-actionneurs 23 portant les actionneurs de freinage 24, et le motoréducteur 30. La couronne d'entraînement 31 n'est pas visible sur cette figure, puisqu'elle est contenue dans un carter 33 qui s'étend autour du porte-actionneurs 23 pour protéger la couronne 31. Sur la figure 1, on constate que le porte-actionneurs 23 est disposé angulairement par rapport à l'axe X de rotation de la roue de sorte que le motoréducteur s'étende en avant de la tige coulissante de l'atterrisseur. Sur l'autre roue, le porte-actionneurs sera disposé angulairement de sorte que le motoréducteur correspondant n'interfère pas avec le motoréducteur de la première roue. Ainsi, les motoréducteurs s'étendent dans des espaces libres de toute interférence, sans interférer entre eux ni avec la structure de l'atterrisseur.

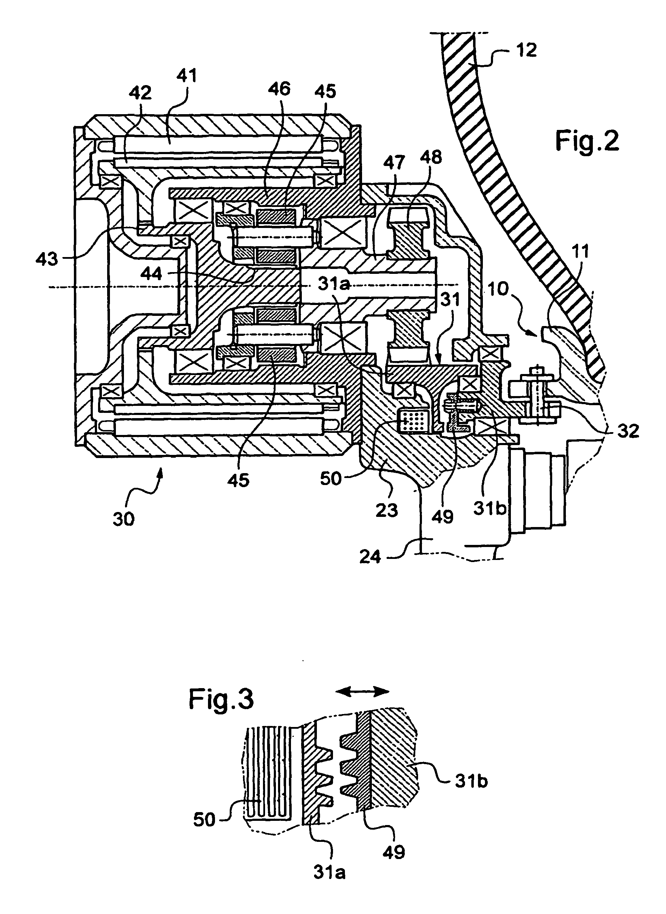

Plus précisément, et en référence à la figure 2, le motoréducteur 30 comporte tout d'abord un moteur électrique annulaire avec un stator 41 et un rotor 42 monté pour tourner autour d'un axe de rotation X, ici s'étendant parallèlement à un axe de rotation de la roue associée. Le rotor 42 est couplé en rotation à un arbre d'entrée 43 qui forme le pignon central 44 d'un réducteur épicycloïdal dont on reconnaît les pignons satellites 45. Ces derniers coopèrent avec une couronne fixe 46 et sont portés par un porte-satellites 47 ayant un arbre de sortie qui reçoit à son extrémité un pignon de sortie 48.

Le pignon de sortie 48 coopère avec la couronne d'entraînement 31 pour faire tourner celle-ci et ainsi entraîner la roue en rotation par l'intermédiaire de pions d'accouplement 32. Ici, la couronne d'entraînement 31 a un diamètre important, sensiblement égal à celui de la jante, de sorte que l'on obtient une réduction conséquente entre le pignon de sortie 48 et la couronne d'entraînement 31, qui s'ajoute à la réduction apportée par le réducteur épicycloïdal du motoréducteur 30.

On remarquera ici que la couronne d'entraînement 31 est en fait composée de deux demi-couronnes 31a et 31b, toutes deux montées à rotation selon le même axe de rotation. La demi-couronne 31a est directement entraînée en rotation par le pignon de sortie 48, tandis que la demi-couronne 31b est attelée à la roue 10 par les pions d'accouplement 32. Les deux demi-couronnes sont montées à rotation sur le porte-actionneur 23 indépendamment l'une de l'autre, mais peuvent être sélectivement accouplées au moyen d'un organe d'accouplement 49 à dents radiales visibles sur la figure 3. L'organe d'accouplement 49 prend ici la forme d'un crabot monté mobile sur la demi-couronne 31b selon une direction axiale pour engager des dents radiales homologues de la demi-couronne 31a, sous l'action d'un électroaimant 50 annulaire s'étendant dans le porte-actionneurs 23. Ainsi, il est possible d'accoupler ou de désaccoupler à volonté les deux demi-couronnes 31a, 31b, et, partant, le motoréducteur 30 et la roue 10. La figure 3 illustre le déplacement possible du crabot 49 sous l'action de l'électroaimant 50, entre la position illustrée ici qui est une position de désaccouplement, et une position d'accouplement dans laquelle les dents du crabot 49 engagent les dents de la demi-couronne 31a.

On accouplera le motoréducteur 30 et la roue 10 lorsque l'on désire entraîner la roue 10 au moyen du motoréducteur 30, ou lorsque l'on désire freiner la roue 10 au moyen du motoréducteur 30 qui fonctionne alors en générateur.

L'entraînement de la roue au moyen d'un motoréducteur disposé sur le porte-actionneurs ne nécessite donc aucune modification des interfaces mécaniques de l'atterrisseur. Il conviendra bien sûr de faire descendre des câbles d'alimentation électrique du motoréducteur. Le motoréducteur est ainsi naturellement disposé dans une zone libre, de sorte qu'il ne nécessite par de modifier l'atterrisseur pour dégager de l'espace pour le motoréducteur. A part le porte-actionneur de freins qui est modifié pour recevoir le motoréducteur et la couronne d'entraînement, la seule modification consiste à prévoir sur la jante de la roue des excroissances pour recevoir les pions d'accouplement 32.

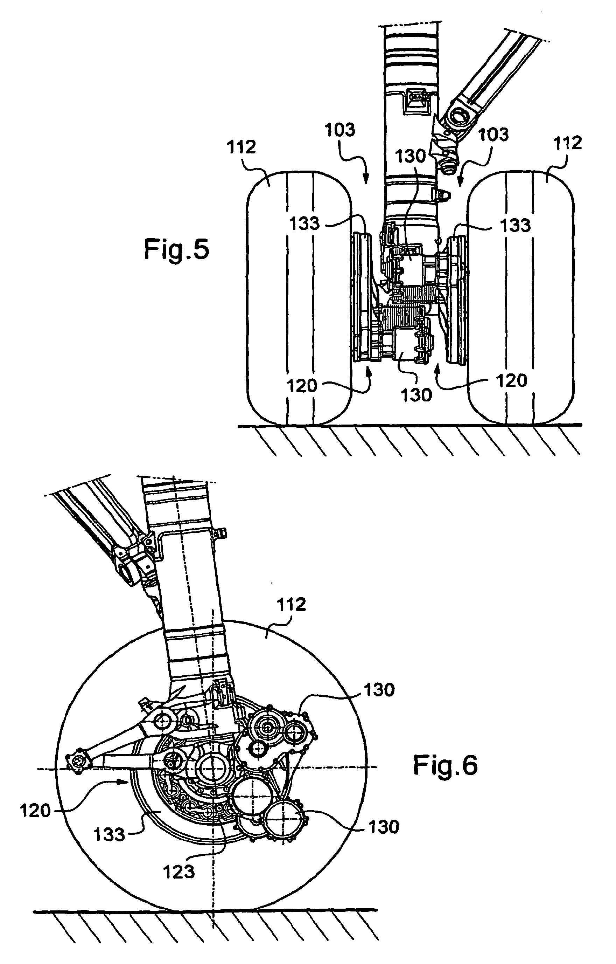

Les figures 5 et 6 illustrent des ensembles 103 de roue et frein selon un deuxième mode particulier de réalisation de l'invention qui sont montés sur un atterrisseur principal comportant ici deux ensembles de roue et frein. On reconnaît, outre les roues 110, les porte-actionneurs 120 entourés chacun d'un carter 133 protégeant la couronne d'entraînement (non visible ici), et les motoréducteurs 130.

Sur la figure 6, où l'une des roues et le porte-actionneurs correspondant a été omis de sorte que seul le motoréducteur correspondant a été laissé, on constate que les deux motoréducteurs 130 s'intègrent parfaitement l'un sous l'autre dans l'espace s'étendant entre les pneumatiques 112.

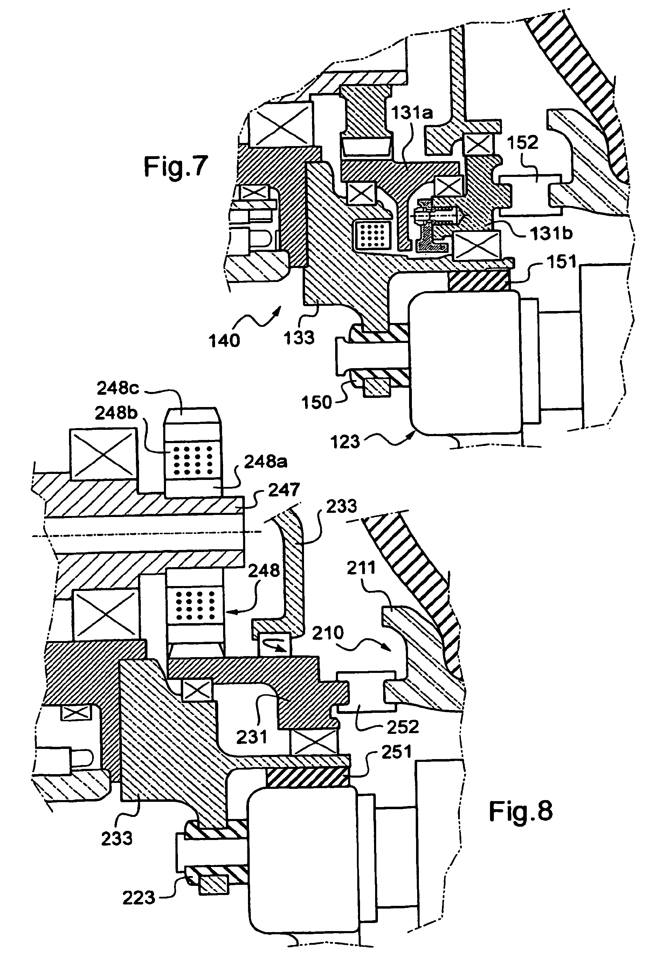

Selon un aspect particulier de l'invention plus particulièrement visible à la figure 7, l'ensemble composé du motoréducteur 130, de la couronne d'entraînement 131 et de son carter 133 forme un ensemble unitaire 140 qui est rapporté sur le porte-actionneurs 123 en interposant des moyens amortisseurs, en l'occurrence ici des silent blocs 150 et des plots amortisseurs 151 à comportement viscoélastique, compatibles avec les températures pouvant être générées par les freinages, et qui remplissent plusieurs rôles :
- les moyens amortisseurs permettent d'absorber les déformations subies par le porte-actionneurs 123 sous les efforts de freinage exercés par les actionneurs de freinage de sorte que ces déformations ne compromettent pas le guidage en rotation de la couronne d'entraînement 131;
- les moyens amortisseurs filtrent les vibrations induites par la disposition en porte-à-faux du motoréducteur 130 pour éviter de transmettre ces vibrations au reste de l'ensemble roue et frein.

Selon encore un autre aspect particulier de l'invention, la couronne d'entraînement 131 est reliée à la jante de la roue non plus de façon rigide, mais par des moyens de liaison élastiques 152, représentés ici de façon schématique, par exemple des ressorts métalliques. Ces moyens de liaison élastiques permettent d'absorber des déformations ou des déplacements de la jante 111 par rapport à la couronne 131.

Selon une variante de réalisation illustrée à la figure 8, la couronne d'entraînement 231 est maintenant en un seul élément et est donc liée en rotation de façon permanente avec la jante 211 de la roue 210, par l'intermédiaire ici de moyens de liaison élastiques 252.

L'arbre de sortie du porte-satellites 247 est ici équipé d'un pignon de sortie 248 comportant une base 248a solidaire de l'arbre de sortie, un coupleur 248b, pour coupler sélectivement la base 248a à une roue dentée 248c coaxiale. Le coupleur 248b permet d'accoupler ou de désaccoupler à la demande le moteur du motoréducteur de la couronne 231, et, partant, de la roue 210. Cette disposition simplifie la conception du carter 233 et de la couronne d'entraînement 231.

L'invention n'est pas limitée à ce qui vient d'être décrit, mais englobe au contraire toute variante entrant dans le cadre défini par les revendications.

En particulier, bien que l'organe d'entraînement en rotation soit ici un motoréducteur électrique, on pourra bien sûr employer d'autres types d'organes d'entraînement en rotation, comme par exemple un moteur hydraulique. En outre, bien que le motoréducteur soit ici équipé d'un réducteur épicycloïdal coaxial au moteur, on pourra bien sûr faire appel à d'autres organes de réduction, non nécessairement coaxiaux.

Bien que l'on ait ici illustré l'invention en application à un atterrisseur dont les roues sont portées par un essieu monté directement en bas de tige coulissante de celui-ci, l'ensemble de roue et frein selon l'invention peut également être monté sur un atterrisseur dont les roues sont portées par un balancier. On veillera alors à ce que l'organe d'entraînement en rotation s'étende par exemple pardessus par-dessous le balancier, là où de l'espace est disponible.

Bien que l'on ait indiqué que le porte-actionneurs recevait un unique organe d'entraînement en rotation, on pourra bien sûr équiper le porte-actionneurs de plusieurs organes d'entraînement en rotation, coopérant tous avec la couronne d'entraînement.

Bien que l'on ait ici équipé la couronne d'entraînement de moyens d'accouplement pour accoupler sélectivement l'organe d'entraînement en rotation avec la roue (organe d'accouplement 49 et électroaimant 50, coupleur 248b), on pourra se passer de tels moyens d'accouplement, si l'organe d'entraînement est prévu pour rester en permanence accouplé à la roue sans que cela ne gêne sa rotation ou son freinage. Enfin, on pourra se passer de couronne d'entraînement, en assurant un entraînement de la roue directement par l'organe d'entraînement en rotation. A cette fin, il conviendra d'équiper la roue de dents ou de reliefs d'entraînement.

## Revendications

1. Ensemble de roue et frein d'aéronef, la roue (10;110) comportant une jante (11;111) montée pour tourner sur un essieu de l'aéronef autour d'un axe de rotation (X), et le frein (20;120) comportant une pile de disques (22) s'étendant dans la jante en service, et un porte-actionneurs (23;123) portant des actionneurs de freinage (24) en regard de la pile de disques pour presser sélectivement ceux-ci, le porte-actionneurs portant au moins un organe d'entraînement (30;130) en rotation de la roue de sorte que l'organe d'entraînement s'étende à l'extérieur de la jante, **caractérisé en ce que** le porte-actionneurs porte une couronne d'entraînement (31,131) qui est montée à rotation sur le porte-actionneurs (23 ; 123) autour de l'axe de rotation (X) de la roue et qui est entraînée en rotation par l'organe d'entraînement en rotation (30;130), la couronne d'entraînement étant solidarisée à la roue pour entraîner celle-ci en rotation.

2. Ensemble de roue et frein d'aéronef selon la revendication 1, dans lequel la couronne d'entraînement (31;131) comporte deux demi-couronnes, dont une première demi-couronne (31a;131a) directement entraînée en rotation par l'organe d'entraînement en rotation, et une deuxième demi-couronne (31b ; 131b) directement liée en rotation à la roue, des moyens d'accouplement (49,50) étant disposés pour lier sélectivement les deux demi-couronnes en rotation.

3. Ensemble de roue et frein d'aéronef selon la revendication 2, dans lequel les moyens d'accouplement comprennent un coupleur (248b) disposé entre un arbre de sortie du motoréducteur et une roue dentée (248c) montée pour engrener avec la couronne d'entraînement (231).

4. Ensemble de roue et frein d'aéronef selon la revendication 1, dans lequel l'organe d'entraînement et la couronne d'entraînement sont inclus dans un ensemble unitaire (140) rapporté sur le porte-actionneurs avec interposition de moyens amortisseurs (150,151).

## Patentansprüche

1. Anordnung aus Rad und Bremse eines Luftfahrzeugs, wobei das Rad (10; 110) eine Felge (11; 111) umfasst, die so angeordnet ist, dass sie sich auf einer Achse des Luftfahrzeugs um eine Rotationsachse (X) dreht, und wobei die Bremse (20; 120) einen Stapel von Scheiben (22) umfasst, der sich in die verwendete Felge erstreckt sowie einen Stellgliederträger (23; 123), der Brems-Stellglieder (24) gegenüber dem Scheibenstapel zum selektiven Zusammendrücken der Scheiben trägt, wobei der Stellgliederträger mindestens ein Antriebsorgan (30; 130) zum Drehantrieb des Rades trägt, derart, dass sich das Antriebsorgan von der Felge nach außen erstreckt, **dadurch gekennzeichnet, dass** der Stellgliederträger einen Antriebskranz (31; 131) trägt, der zur Rotation um die Rotationsachse (X) des Rades auf dem Stellgliederträger (23; 123) angeordnet ist, und der durch das Drehantriebsorgan (30; 130) zur Rotation gebracht wird, wobei der Antriebskranz fest mit dem Rad verbunden ist, damit dieses zur Rotation gebracht wird.

2. Anordnung aus Rad und Bremse eines Luftfahrzeugs nach Anspruch 1, bei dem der Mitnahmekranz (31; 131) zwei Halbkränze umfasst, von denen ein erster Halbkranz (31a; 131a) direkt durch das Rotations-Mitnahmeorgan zur Rotation gebracht wird, und ein zweiter Halbkranz (31b; 131b) zur Rotation direkt mit dem Rad verbunden ist, wobei Kupplungsmittel (49, 50) zur selektiven Rotationverbindung der beiden Halbkränze angeordnet sind.

3. Anordnung aus Rad und Bremse eines Luftfahrzeugs nach Anspruch 2, bei dem die Kupplungsmittel eine Kupplung (248b) umfassen, die zwischen einer Ausgangswelle des Getriebemotors und einem Zahnrad (248c), das so ausgebildet ist, dass es mit dem Mitnahmekranz (231) in Eingriff steht, angeordnet ist.

4. Anordnung aus Rad und Bremse eines Luftfahrzeugs gemäß Anspruch 1, bei dem das Antriebsorgan und der Antriebskranz in einer einheitlichen Anordnung (140) eingeschlossen sind, die auf dem Stellgliederträger durch Zwischenschaltung von Stoßdämpfern (150, 151) befestigt ist.

## Claims

1. An aircraft wheel-and-brake set, the wheel (10; 110) including a rim (11; 111) mounted to rotate on an axle of the aircraft about an axis of rotation (X), and the brake (20; 120) including a stack of disks (22) extending into the rim in service, and an actuator-carrier (23; 123) carrying brake actuators (24) facing the stack of disks in order to selectively press said disks together, the actuator-carrier carrying at least one rotary drive member (30; 130) for driving the wheel in rotation in such a manner that the drive member extends outside the rim, the wheel-and-brake set being **characterized in that** the actuator-carrier carries a ring gear (31; 131) that is mounted to rotate on the actuator-carrier (23; 123) about the axis of rotation (X) of the wheel and that is driven in rotation by the rotary drive member (30; 130), the ring gear being secured to the wheel in order to drive said wheel in rotation.

2. An aircraft wheel-and-brake set according to claim 1, wherein the ring gear (31; 131) comprises two half-gears, a first of which half-gears (31a; 131a) is directly driven in rotation by the rotary drive member, and a second half-gear (31b; 131b) is directly constrained to rotate with the wheel, coupler means (49, 50) being disposed in order to selectively connect the half-gears together in rotation.

3. An aircraft wheel-and-brake set according to claim 1, wherein the coupler means comprise a coupler agent (248b) disposed between an outlet shaft of the geared motor and a toothed wheel (248c) mounted to mesh with the ring gear (231).

4. An aircraft wheel-and-brake set according to claim 1, wherein the drive member and the ring gear are included in a single unit (140) that is placed on the actuator-carrier with damper means (150,151) being interposed thereon.
